# EUROPEAN PATENT APPLICATION

(11) **EP 3 664 002 A1**
(43) Date of publication of application: **10.06.2020**
(21) Application number: 19213232.2
(22) Date of filing: 03.12.2019
(51) Int. Cl.: G06Q 10/08, G06Q 10/00, G06Q 10/06, G06Q 50/04

(54) **METHOD AND SYSTEM FOR STRATEGIC DEPLOYMENT OF COMPONENTS**

(30) Priority: 04.12.2018 US 201816209918
(71) Applicant: General Electric Company, Schenectady, NY 12345 (US)
(72) Inventor: RUGGIERO, Eric John, Cincinnati, OH Ohio 45215 (US); TALLMAN, James, Niskayuna, NY New York 12309 (US); SALAPAKKAM, Pradeep, Mason, OH Ohio 45040 (US)
(74) Representative: Openshaw & Co.

(57) **Abstract**

There are provided methods and systems for optimizing a manufacturing process. For example, there is provided a method for optimizing a manufacturing process of a new part. The method includes executing, by a system configured to drive the manufacturing process, a set of manufacturing. The method includes receiving data associated with one or more fielded parts. The method further includes generating a first model associated with the one or more fielded parts and updating a second model associated with the new part based on the first model. The method further includes manufacturing the new part according to the updated second model.

## Description

### TECHNICAL FIELD

The present disclosure generally relates to the manufacturing, deployment, and the management of industrial assets and their components. More particularly, the present disclosure relates to methods and systems for strategically deploying assets and/or their components.

### BACKGROUND

The typical lifecycle earnings curve of a newly launched product may exhibit three distinct phases. The first phase, which is the earliest, typically includes early field experiences in which customers adopt and evaluate the product, and the manufacturer of the product gathers data regarding commercial and technical aspects of the product's in-field use. In the first phase, the manufacturer's earnings are typically negative, as the cost of manufacturing and deploying the product may exceed the revenues generated from early-adopting customers.

The second phase, which typically begins at the point where earnings become positive, includes a high growth phase where the product is adopted by many customers and earnings grow at a rapid pace. In the third phase, a plateau in the earnings is typically observed, suggesting the product has reached its maximum market potential.

From a manufacturer's perspective, one of the goals of a typical manufacturing processes is to provide value to customers. As such, parts are typically designed to provide the maximum durability possible, and typical manufacturing processes are optimized accordingly. However, typical manufacturing processes lack the technological infrastructure that can allow one to favorably alter the earning's curve without compromising durability or to balance the processes across a given enterprise. In other words, current manufacturing process are not geared towards optimizing manufacturing costs and part performance.

### SUMMARY

The embodiments featured herein help solve or mitigate the above-noted issues as well as other issues known in the art. Embodiments that are achievable in view of the present disclosure allow the strategic deployment of components in a fleet of assets.

For example, an embodiment may provide a model of a deployed assets'/parts'/ components' forecasted longevity in fielded operation; this model may be used to provide updates to a model of a new-make, i.e. to a model of an as-manufactured assets'/parts'/components. The updates may be based on one or more digital data streams. The updated model of the new make can then be leveraged to drive manufacturing processes based on new make part manufacturing data, route structure, de-rate, and environmental conditions. In an example implementation, the aforementioned two models may be either physics-based, machine-learning based, artificial-intelligence based, or a combination thereof.

Another embodiment provides a method for optimizing a manufacturing process of a new part. The method includes executing, by a system configured to drive the manufacturing process, a set of manufacturing functions. The method includes receiving data associated with an in-field part and generating a model of the in-field part's durability. In some implementations, the model of the in-field part's durability may be physics-based, machine learning-based, artificial intelligence-based, or a combination thereof. The method further includes updating a model for the new part based on the model of the in-field part's durability. The model for the new part, in some implementations where machine learning and/or artificial intelligence is used, may be updated in real time.

Another embodiment provides a system for optimizing a manufacturing process of a new part. The system includes a processor and memory storing instructions that, when executed by the processor, cause the processor to perform certain operations. The operations can include receiving data associated with an in-field part and generating a model of the in-field part's durability based on the data. The operations can further include updating a model of the new part based on the model of the in-field part's durability. In some implementations, the model of the in-field part's durability may be physics-based, machine learning-based, artificial intelligence-based, or a combination thereof. The model for the new part, in some implementations where machine learning and/or artificial intelligence is used, may be updated in real time.

Additional features, modes of operations, advantages, and other aspects of various embodiments are described below with reference to the accompanying drawings. It is noted that the present disclosure is not limited to the specific embodiments described herein. These embodiments are presented for illustrative purposes only. Additional embodiments, or modifications of the embodiments disclosed, will be readily apparent to persons skilled in the relevant art(s) based on the teachings provided.

### BRIEF DESCRIPTION OF THE DRAWINGS

Illustrative embodiments may take form in various components and arrangements of components. Illustrative embodiments are shown in the accompanying drawings, throughout which like reference numerals may indicate corresponding or similar parts in the various drawings.

Furthermore, the drawings are only for purposes of illustrating the embodiments and are not to be construed as limiting the disclosure. Given the following enabling description of the drawings, the novel aspects of the present disclosure should become evident to a person of ordinary skill in the relevant art(s).
FIG. 1 Illustrates a process according to an embodiment.
FIG. 2 illustrates a method according to an embodiment.
FIG. 3 illustrates a system according to an embodiment.

### DETAILED DESCRIPTION

While the illustrative embodiments are described herein for particular applications, it should be understood that the present disclosure is not limited thereto. Those skilled in the art and with access to the teachings provided herein will recognize additional applications, modifications, and embodiments within the scope thereof and additional fields in which the present disclosure would be of significant utility.

In one example embodiment, borescope inspection data, blue-light scanned part geometry data, optical images (photographs) of hardware, infrared light-based measurements, and partial or full field data streams may be fed back to a model of a fielded part's durability. These quantified images may then be used to update part life condition and then leveraged to fine tune the accuracy of the model. Then, the information is used to drive new kitting decisions to manufacture one or more new parts.

As such, models formalized from the aforementioned data streams can be used by commercial teams to provide tailored contracts optimized for both time on wing, upfront manufacturing parameters, and cost. Furthermore, it is noted that while there currently is a large emphasis placed on optical inspection techniques to quantify damage in hardware, the exemplary embodiments featured herein can also make use of novel inspection techniques like pressure-sensitive paint-based inspection methods, blue light scans, and even infrared thermography to provide physics-rich data back to engineering models for the purpose of improving predictive capabilities.

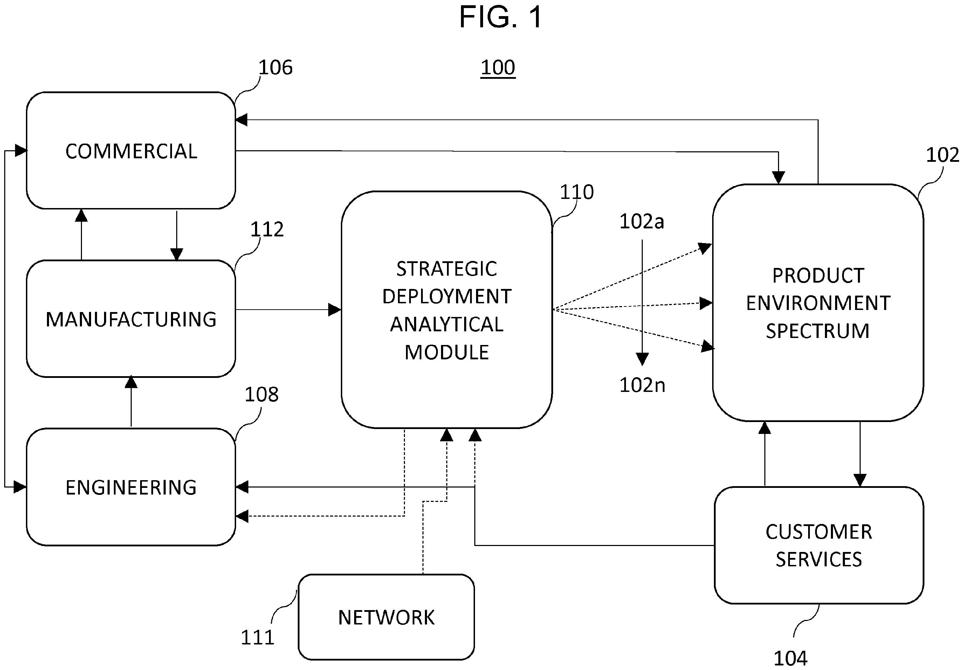

FIG. 1 illustrates a process 100 in accordance with an exemplary embodiment. The process 100 may be an example process associated with the lifecycle of a component and/or a general manufacturing cycle. While the process 100 is described in the context of airplane or jet engine parts, it may extend to the manufacture or in general to the lifecycle of any manufactured component. The process 100 includes a module 102 that is a product environment spectrum. In other words, the module 102 can be a database that stores information of about one or more instances of the same product as they are used in the field.

For example, the module 102 may include information about the reliability or failure of a plurality of turbine blades as they are commissioned in a fleet of engines (i.e., in two or more engines, or generally on two or more planes). The module 102 may be configured to organize, or present upon request from a device communicatively coupled thereto, a product environment spectrum which sorts all of the products of interest in a predetermined order.

For example, the products may be sorted from best performing (102a) to worst performing (102n). Generally, one or more criteria may be used to sort these products according to the aforementioned spectrum. For example, in the case of a hot gas path component of an engine, the products may be sorted according to their thermal performance, which may be measured using one or more full-field inspection methods.

The product environment spectrum may be driven by constraints from customers, which may be collected and functionalized (i.e., put in the form of computer instructions) in the module 104. Similarly, the product environment spectrum may be driven by commercial constraints, which may be functionalized in the module 106.

The customer constraints of the module 104 may also drive the engineering functions of the module 108, which in turn drive the manufacturing decisions, as functionalized in the module 112. The process 100 further includes a strategic deployment analytical module 110, which is an analytics module that can output a model for a new-make to further alter the engineering decisions of the module 108 and consequently produce a new set of manufacturing functions at the module 112. For example, and not by limitation, the new-make model may be associated with an engine component such as a hot gas path of an engine. In yet another embodiment, the new-make model may also be associated with cold section parts like compressor blades to optimize for a parameter like the cold section aerodynamic efficiency at the module level.

Furthermore, the new set of manufacturing functions may represent an optimized set of manufacturing functions relative to another of set of manufacturing functions that are not based on the new-make model. For instance, the set of manufacturing functions may be a manufacturing process that provides both a better part (i.e., with durability tuned specifically for the application in which the part is to be used) and an optimized cost for manufacturing the part.

The analytical module 110 is configured to provide a model for a new part that is to be manufactured based on a model of a fielded part that is constructed from one or more digital data streams associated with the field part and that are received a network 111. In other words, the new and updated model can drive new manufacturing functions based on models of already in-use parts; the latter models are built from inspection data associated with the in-use parts. Therefore, the updated model provides the ability to drive optimized profitability based on new make part manufacturing data, route structure, de-rate, and environmental conditions.

Generally, the model associated with a fielded part may include a first layer that contains constantly updated predictions of how every individual part in every individual system is aging or wearing, and how much remaining life all those parts have. As such, this model features a statistical distribution associated with the durability of the fielded parts. For example, such a distribution would indicate that some parts have more life remaining whereas some parts have less life remaining. The accuracy of those predictions get better and better with time because the estimation of longevity get better and better with time as the model is continually updated with new calibration / tuning / training data from more and more parts coming through the shops.

In a second layer, the model associated with a fielded part may include data for new make parts being manufactured. In the embodiments, this these two layers can be combined (e.g. digitally) to update a new make model that relates the fielded part data to future new-makes, thereby connecting those forecasts of how much remaining life the parts have throughout their lifecycle. That new-make model representation can then be used to drive decisions about how many parts to make, what are the quality of parts that are needed, and where to send different quality parts, e.g. to what suppliers in our supply chain. In yet another embodiment, the new-make model may correlate specific inspection signals with part quality.

The new make model can be machine learning-based, artificial intelligence-based, or correlation based, or a combination thereof. In implementations where machine learning and/or artificial intelligence are used, the new make model can be update in real-time and digitally threaded into manufacturing systems in order to drive manufacturing outcomes.

With the embodiments, parts can be made cheaper as the new-make model can provide specific insights into anticipated part performance for a given application. For example, in one example use case, lower life parts for a second stage of a turbine may be manufactured where the model yields that parts of the first stage of the turbine wear out prematurely. In other words, in this example, the model can indicate that since first stage parts will fail first, parts in the second stage need not be optimize so as to outperform parts in the first stage. At a later time, when first stage issues are fixed issues, since the new make model can be dynamically updated, the manufacturing function for the second stage parts can be updated so as to make new parts for the second stage that last longer. As such, the embodiments can allow multi-part strategic deployments.

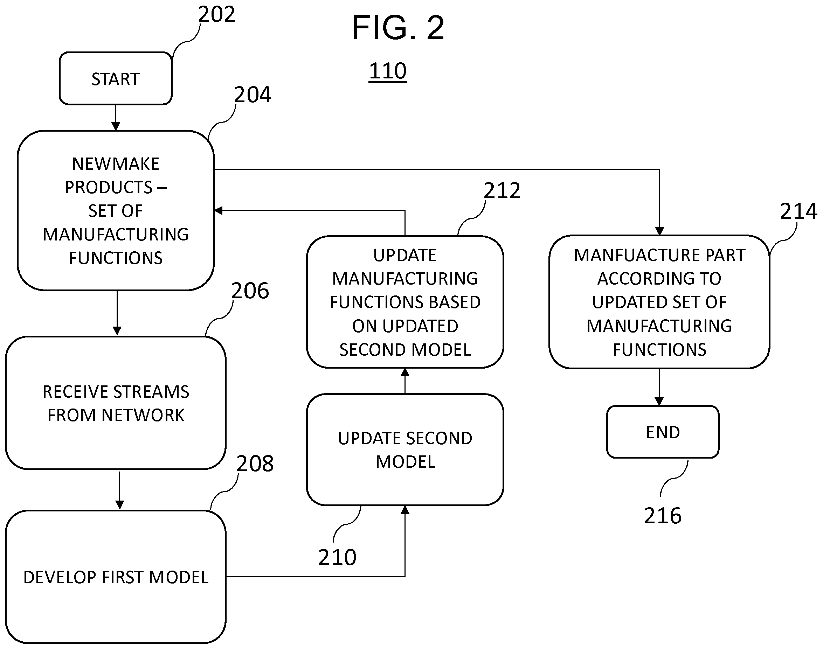

FIG. 2 illustrates an exemplary method that may be executed by the analytical module 110 and integrated within the process 100. The method begins at the step 202, and it includes setting up manufacturing directives for making a new part (step 204). These directives may initially include a set of manufacturing functions for making the new part based on geometrical constraints or generally based on a predetermined initial set of manufacturing functions.

The process 100 then moves to step 206 where data streams from the network 111 are fetched and used at step 208 to create a model. The method then moves to step 210 where the initial model for the new part is updated according to the newly created model. The method then creates a new, i.e. an updated set of manufacturing functions, (step 212) in response to the updated model. The method then includes manufacturing the new part according to the updated set of manufacturing functions at step 214, and the method ends at step 216.

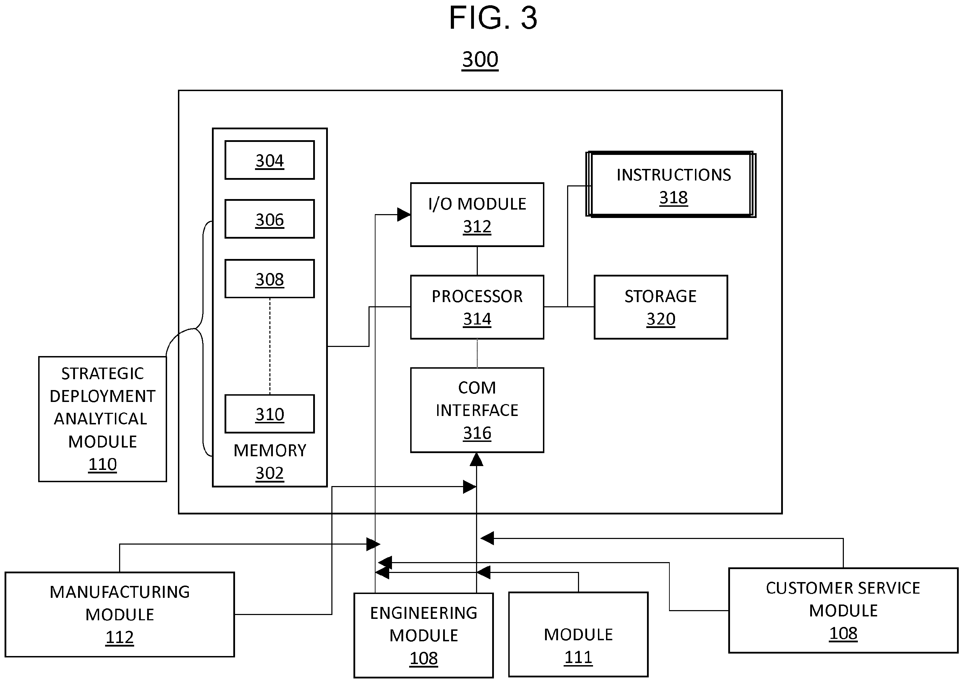

Having described methods and processes, an application-specific system that is configured to carry out these processes and methods is now described. FIG. 3 depicts a system 300 that includes an application-specific processor 314 configured to perform tasks specific to optimizing a manufacturing process based on a model. The system 300 may be a localized system or it may be part of a cloud-based computing infrastructure. The processor 314 has a specific structure imparted by instructions stored in a memory 302 and/or by instructions 318 that can be fetched by the processor 314 from a storage 320. The storage 320 may be co-located with the processor 314, or it may be located elsewhere and be communicatively coupled to the processor 314 via a communication interface 316, for example.

The system 300 can be a stand-alone programmable system, or it can be a programmable module located in a much larger system. For example, the system 300 can be part of a distributed system configured to handle the various modules of the process 100 described above. The processor 314 may include one or more hardware and/or software components configured to fetch, decode, execute, store, analyze, distribute, evaluate, and/or categorize information. Furthermore, the processor 314 can include an input/output module (I/O module 312) that can be configured to ingest data pertaining to single assets or fleets of assets.

The processor 314 may include one or more processing devices or cores (not shown). In some embodiments, the processor 314 may be a plurality of processors, each having either one or more cores. The processor 314 can be configured to execute instructions fetched from the memory 302, i.e. from one of memory block 304, memory block 306, memory block 308, and memory block 310.

Furthermore, without loss of generality, the storage 320 and/or the memory 302 may include a volatile or non-volatile, magnetic, semiconductor, tape, optical, removable, non-removable, read-only, random-access, or any type of non-transitory computer-readable computer medium. The storage 320 may be configured to log data processed, recorded, or collected during the operation of the processor 314.

The data may be time-stamped, location-stamped, cataloged, indexed, or organized in a variety of ways consistent with data storage practice. The storage 320 and/or the memory 302 may include programs and/or other information that may be used by the processor 314 to perform tasks consistent with those described herein.

For example, the processor 314 may be configured by instructions from the memory block 306, the memory block 308, and the memory block 310, which may form the analytical module 110 described above, to generate a model based on data streams received from the network 111. The processor 314 may execute the aforementioned instructions from memory blocks, 306, 308, and 310. The processor 314 may then output a set of manufacturing instructions that optimizes the process.

Generally, the operations performed by the processor upon executing the instructions from the memory blocks 306, 308, and 310 may include constructing a set of manufacturing functions based on a recommendation fetched from a canvas of information originating from at least one of the manufacturing module 112, the engineering module 108, and the customer service module 104, and the network 110. The operations can include receiving data associated with an inspection of an in-field part and generating a model of the in-field part based on the data. The operations can further include updating a model of the new part based on the model.

Those skilled in the relevant art(s) will appreciate that various adaptations and modifications of the embodiments described above can be configured without departing from the scope and spirit of the disclosure. Therefore, it is to be understood that, within the scope of the appended claims, the disclosure may be practiced other than as specifically described herein.

Further aspects of the invention are provided by the subject matter of the following clauses:
1. A method of manufacturing a new part, the method comprising:
   executing, by a system configured to drive the manufacturing process, a set of manufacturing functions, the executing including:
   receiving, by the system, data associated with one or more fielded parts, the one or more fielded parts being a combination of one or more parts having been in use and one or more parts having been newly manufactured;
   generating, by the system, a first model based on the data, the first model including a first layer associated with the one or more parts having been in use and a second layer associated with the one or more parts having been newly manufactured;
   updating a second model associated with the new part based on the first model, the updating yielding the set of manufacturing functions; and
   manufacturing the new part according to the set of manufacturing functions.
2. The method of any preceding clause, wherein at least one of the first and second model is based one of a machine learning-based model, an artificial intelligence-based model, a physics-based model, a correlation-based model, or a specified combination thereof.
3. The method of any preceding clause, wherein the data include a set of images associated with an inspection of a fielded part.
4. The method any preceding clause, wherein the inspection is based on an optical inspection device.
5. The method of any preceding clause, wherein the executing further includes fetching the data from a network.
6. The method of any preceding clause, wherein the one or more fielded parts are associated with a hot gas path of an engine or with a cold section of the engine.
7. The method of any preceding clause, wherein data includes at least one of borescope data, blue-light scanned part geometry data, optical images, infrared measurements, pressure-sensitive paint data, or a specified combination thereof.
8. The method of any preceding clause, wherein the executing includes driving new kitting decisions.
9. The method of any preceding clause, wherein the executing includes driving new kitting decisions for maximizing at least one of manufacture profitability and durability.
10. A system for manufacturing a new part, the system comprising:
   a processor;
   a memory including instructions that, when executed by the processor, cause the processor to perform operations including:
      receiving data associated with one or more fielded parts, the one or more fielded parts being a combination of one or more parts having been in use and one or more parts having been newly manufactured;
      generating a first model based on the data, the first model including a first layer associated with the one or more parts having been in use and a second layer associated with the one or more parts having been newly manufactured;
      updating a second model associated with the new part based on the first model; and
      generating the set of manufacturing functions to cause the manufacturing system to manufacture the new part according to the set of manufacturing functions.
11. The system of any preceding clause, wherein at least one of the first and second model is based one of a machine learning-based model, an artificial intelligence-based model, a physics-based model, a correlation-based model, or a specified combination thereof.
12. The system of any preceding clause, wherein the data include a set of images associated with the one or more fielded parts.
13. The system of any preceding clause, wherein the inspection is based on an optical inspection device.
14. The system of any preceding clause, wherein the executing further includes fetching the data from a network.
15. The system of any preceding clause, wherein the one or more fielded parts are associated with a hot gas path of an engine or with a cold section of the engine.
16. The system of any preceding clause, wherein the data includes at least one of borescope inspection data, blue-light scanned part geometry data, optical images, infrared measurements, pressure sensitive paint-based measurements, or a specified combination thereof.
17. The system of any preceding clause, wherein the operations further include driving new kitting decisions.
18. The system of any preceding clause, wherein the operations further include driving new kitting decisions for maximizing at least one of profitability and durability.
19. The system of any preceding clause, wherein the data include an image.
20. The system of any preceding clause, wherein the executing includes generating a real time update for the second model based on the image.

## Claims

1. A method of manufacturing a new part, the method comprising:
executing, by a system configured to drive the manufacturing process, a set of manufacturing functions, the executing including:
receiving, by the system, data associated with one or more fielded parts, the one or more fielded parts being a combination of one or more parts having been in use and one or more parts having been newly manufactured;
generating, by the system, a first model based on the data, the first model including a first layer associated with the one or more parts having been in use and a second layer associated with the one or more parts having been newly manufactured;
updating a second model associated with the new part based on the first model, the updating yielding the set of manufacturing functions; and
manufacturing the new part according to the set of manufacturing functions.

2. The method of claim 1, wherein at least one of the first and second model is based one of a machine learning-based model, an artificial intelligence-based model, a physics-based model, a correlation-based model, or a specified combination thereof.

3. The method of claim 1 or 2, wherein the data include a set of images associated with an inspection of a fielded part.

4. The method claim 3, wherein the inspection is based on an optical inspection device.

5. The method of any of claims 1 to 4, wherein the executing further includes fetching the data from a network.

6. The method of any of claims 1 to 5, wherein the one or more fielded parts are associated with a hot gas path of an engine or with a cold section of the engine.

7. The method of any of claims 1 to 6, wherein data includes at least one of borescope data, blue-light scanned part geometry data, optical images, infrared measurements, pressure-sensitive paint data, or a specified combination thereof.

8. The method of any of claims 1 to 7, wherein the executing includes driving new kitting decisions.

9. The method of any of claims 1 to 8, wherein the executing includes driving new kitting decisions for maximizing at least one of manufacture profitability and durability.

10. A system for manufacturing a new part, the system comprising:
a processor;
a memory including instructions that, when executed by the processor, cause the processor to perform operations including:
receiving data associated with one or more fielded parts, the one or more fielded parts being a combination of one or more parts having been in use and one or more parts having been newly manufactured;
generating a first model based on the data, the first model including a first layer associated with the one or more parts having been in use and a second layer associated with the one or more parts having been newly manufactured;
updating a second model associated with the new part based on the first model; and
generating the set of manufacturing functions to cause the manufacturing system to manufacture the new part according to the set of manufacturing functions.

11. The system of claim 10, wherein at least one of the first and second model is based one of a machine learning-based model, an artificial intelligence-based model, a physics-based model, a correlation-based model, or a specified combination thereof.

12. The system of claim 10 or 11, wherein the data include a set of images associated with the one or more fielded parts.

13. The system of any of claims 10 to 12, wherein the inspection is based on an optical inspection device.

14. The system of any of claims 10 to 13, wherein the one or more fielded parts are associated with a hot gas path of an engine or with a cold section of the engine.

15. The system of any of claims 10 to 14, wherein the data includes at least one of borescope inspection data, blue-light scanned part geometry data, optical images, infrared measurements, pressure sensitive paint-based measurements, or a specified combination thereof.
